# EUROPEAN PATENT APPLICATION

(11) **EP 4 799 844 A1**
(43) Date of publication of application: **02.09.2026**
(21) Application number: 26157283.8
(22) Date of filing: 09.02.2026
(51) Int. Cl.: B60K 35/21, B60K 35/10, B60K 35/215, B60K 35/22, B60K 35/60, B60K 35/81, G09G 3/34, G09G 5/10

(54) **DISPLAY CONTROL DEVICE, DISPLAY CONTROL METHOD, AND NON-TRANSITORY STORAGE MEDIUM**

(30) Priority: 27.02.2025 JP 2025030662
(71) Applicant: Toyota Jidosha Kabushiki Kaisha, Toyota-shi, Aichi-ken 471-8571 (JP)
(72) Inventor: IKEBUCHI, Daisuke, Toyota-shi, 471-8571 (JP)
(74) Representative: J A Kemp LLP

(57) **Abstract**

The present disclosure relates to a display control device, a display control method, and a non-transitory storage medium. The display control device controls at least one in-vehicle display (6), and includes a processor (30) that decreases visibility of the at least one display (6), in response to a user input from a user of a vehicle. The at least one display (6) includes a meter display (62).

## Description

### BACKGROUND OF THE INVENTION

### 1. Field of the Invention

The present disclosure relates to a display control device, a display control method, and a non-transitory storage medium.

### 2. Description of Related Art

Japanese Unexamined Patent Application Publication No. 2023-031630 (JP 2023-031630 A) discloses that an air conditioning device (air conditioner) of a vehicle is controlled so as to be in a state suitable for a catnap when a catnap state is detected, so that a user of the vehicle can comfortably sleep in a vehicle cabin.

### SUMMARY OF THE INVENTION

However, the comfortable sleep in the vehicle cabin is influenced not only by an air conditioning state in the vehicle cabin but also by an illumination state in the vehicle cabin. For example, there is a concern that the illumination of an in-vehicle display may disturb the sleep of an occupant of the vehicle. Particularly, there is a need for the adjustment of the illumination state of a meter display that is expected to always perform displaying.

The present disclosure provides a display control device, a display control method, and a non-transitory storage medium that make it possible to adjust the illumination state of the in-vehicle display including the meter display, based on the desire of the user of the vehicle.

A display control device that controls at least one in-vehicle display in a first aspect of the present disclosure includes a processor configured to decrease visibility of the at least one display, in response to a user input from a user of a vehicle. The at least one display includes a meter display.

In the display control device according to the first aspect, the processor may be configured to decrease a luminance of the meter display.

In the display control device according to the first aspect, the processor may be configured to generate a black image on the meter display and turn off light of the meter display.

In the display control device according to the first aspect, the meter display may include a plurality of layers, and the processor may be configured to display black images on some layers among the plurality of the layers.

In the display control device according to the first aspect, the some layers may be configured not to display a tell-tale.

In the display control device according to the first aspect, the at least one display may include a multimedia display. The user input may include a first user input for an instruction to turn off light of a first display group and a second user input for an instruction to turn off light of a second display group, the first display group including the meter display and not including the multimedia display, the second display group including the meter display and the multimedia display. The processor may be configured to decrease visibility of the first display group in response to the first user input and decrease visibility of the second display group in response to the second user input.

In the display control device according to the first aspect, the processor may be configured to increase the visibility of the first display group due to an operation of the multimedia display by the user, in a situation where the visibility of the first display group has been decreased.

In the display control device according to the first aspect, the processor may be configured to increase the visibility of the second display group due to an operation of the multimedia display by the user, in a situation where the visibility of the second display group has been decreased.

In the display control device according to the first aspect, the processor may be configured to set a mode of the vehicle to a state keeping mode. The state keeping mode is a mode in which a vehicle state is kept based on an instruction from the user, the vehicle state being a vehicle state where electric power is supplied to an air conditioner of the vehicle and the at least one display and is not supplied to a drive system of the vehicle. The processor may be configured to permit decrease in the visibility of the at least one display, in response to setting the mode of the vehicle to the state keeping mode.

A display control method that is executed by a computer for controlling at least one in-vehicle display in a second aspect of the present disclosure includes decreasing visibility of the at least one display, in response to a user input from a user of a vehicle. The at least one display includes a meter display.

A non-transitory storage medium in a third aspect of the present disclosure stores instructions that are executable by one or more processors and that cause the one or more processors to perform functions for controlling at least one in-vehicle display. The functions include decreasing visibility of the at least one display, in response to a user input from a user of a vehicle. The at least one display includes a meter display.

With the present disclosure, it is possible to adjust the illumination state of an in-vehicle display including the meter display, based on the desire of the user of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a connected system including a vehicle that is equipped with a display control device according to a present embodiment;
FIG. 2 is a schematic configuration diagram of a display control system including the display control device according to the embodiment of the present invention;
FIG. 3 is a diagram schematically showing a vehicle interior decoration in front of a driver's seat and an assistant driver's seat;
FIG. 4 is a diagram schematically showing the flow of electric power among electric components of the vehicle;
FIG. 5 is a diagram showing the transition of a power supply state in the vehicle;
FIG. 6 is a functional block diagram of a processor of an ECU;
FIG. 7 shows an exemplary confirmation screen for confirming whether the end of a state keeping mode is performed;
FIG. 8 shows an exemplary confirmation screen for confirming whether the transition of the power supply state is performed;
FIG. 9 is a flowchart showing a control routine of a visibility adjustment process in the first embodiment of the present invention;
FIG. 10 is a diagram showing an exemplary execution screen for the state keeping mode in the first embodiment;
FIG. 11 is a flowchart showing a control routine of a visibility adjustment process in a second embodiment of the present invention;
FIG. 12 is a diagram showing an exemplary execution screen for the state keeping mode in the second embodiment; and
FIG. 13 is a diagram schematically showing the display screen of a meter display that includes a plurality of layers.

### DETAILED DESCRIPTION OF EMBODIMENTS

Embodiments of the present invention will be described below in detail with reference to the drawings. In the following description, similar constituent elements are denoted by the same reference signs.

### First Embodiment

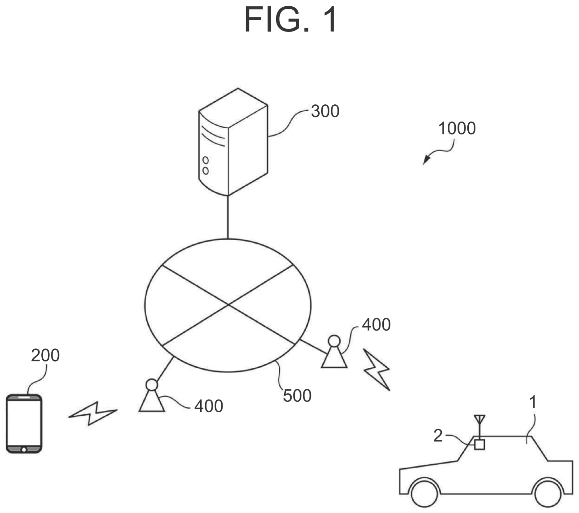

FIG. 1 is a schematic configuration diagram of a connected system 1000 including a vehicle 1 that is equipped with a display control device according to a present embodiment. The connected system 1000 includes a vehicle 1, a portable terminal 200, and a server 300. The vehicle 1 and the portable terminal 200 each communicate with the server 300 through a wireless base station 400 and a communication network 500. In the embodiment, the vehicle 1 is a four-wheel automobile.

The portable terminal 200 is owned by a user of the vehicle 1, and includes at least one of a smartphone, a tablet terminal, a smartwatch, and smart glasses. The portable terminal 200 includes a processor that performs various processes in the portable terminal 200, an input apparatus (a touch panel, an operation button, a microphone, and the like), an output apparatus (a display, a speaker, and the like), and a communication module. The communication module of the portable terminal 200 accesses the wireless base station 400, and thereby, connects the portable terminal 200 to the communication network 500 through the wireless base station 400. The communication between the portable terminal 200 and the wireless base station 400 is performed based on a known wireless communication standard (for example, 3G, LTE, 4G, 5G, or 6G).

The server 300 is provided in the exterior of the vehicle 1, and includes a communication interface, a storage, a memory, a processor, and the like. The server 300 may be constituted by a plurality of computers. The server 300 is operated by a manufacturer of the vehicle 1, for example, and is also referred to as a center.

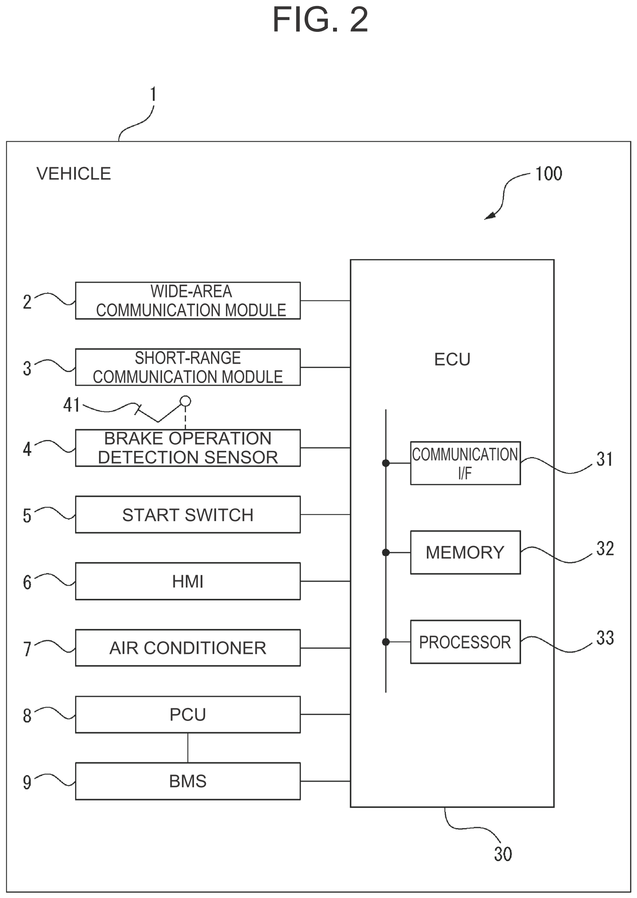

FIG. 2 is a schematic configuration diagram of a display control system 100 including the display control device according to the embodiment of the present invention. The display control system 100 is equipped in the vehicle 1.

As shown in FIG. 2, the display control system 100 includes a wide-area communication module 2, a short-range communication module 3, a brake operation detection sensor 4, a start switch 5, a human-machine interface (HMI) 6, an air conditioner 7, a power control unit (PCU) 8, a battery management system (BMS) 9, and an electronic control unit (ECU) 30. The wide-area communication module 2, the short-range communication module 3, the brake operation detection sensor 4, the start switch 5, the HMI 6, the air conditioner 7, the PCU 8, and the BMS 9 are electrically connected to the ECU 30, for example, through an in-vehicle network that complies with a standard such as Controller Area Network (CAN) or Ethernet.

The ECU 30 executes various controls of the vehicle 1. As shown in FIG. 2, the ECU 30 includes a communication interface 31, a memory 32, and a processor 33. The communication interface 31 and the memory 32 are connected to the processor 33 through a signal wire. In the embodiment, one ECU 30 is provided, but a plurality of ECUs corresponding to different functions may be provided. Further, the communication interface 31, the memory 32, and the processor 33 may be configured as one integrated circuit, or may be configured as circuits separated from each other.

The communication interface 31 includes an interface circuit for connecting the ECU 30 to the in-vehicle network. The ECU 30 is connected to another in-vehicle apparatus through the communication interface 31. In the embodiment, the communication interface 31 sends, to the processor 33, signals received from the wide-area communication module 2, the short-range communication module 3, the brake operation detection sensor 4, the start switch 5, the HMI 6, the PCU 8, and the BMS 9. Further, the communication interface 31 sends signals output from the processor 33, to the wide-area communication module 2, the short-range communication module 3, the HMI 6, the air conditioner 7, the PCU 8, and the BMS 9.

For example, the memory 32 includes a volatile semiconductor memory (for example, a dynamic random access memory (DRAM) or a static random access memory (SRAM)) and a non-volatile semiconductor memory (for example, a read only memory (ROM), an electrically erasable programmable read only memory (EEPROM), or a flash memory). The memory 32 stores temporary data, computer programs (control programs for the ECU 30) that are used for various processes by the processor 33, setting data about the ECU 30, log data, vehicle information, and the like. The memory 32 may be an exemplary storage unit. The memory 32 may be a non-transitory storage medium.

The processor 33 includes one or a plurality of central processing units (CPUs) and peripheral circuits. The processor 33 executes computer programs stored in the memory 32. The processor 33 may further include other arithmetic circuits such as an arithmetic-logic unit, a numerical unit, or a graphics processing unit. In-vehicle components connected to the ECU 30 will be described below.

The wide-area communication module 2 allows wide-area wireless communication between the vehicle 1 and the exterior of the vehicle 1 (for example, the server 300). The wide-area communication module 2 accesses the wireless base station 400, and thereby, connects the vehicle 1 to the communication network 500 through the wireless base station 400. The communication between the vehicle 1 and the wireless base station 400 is performed based on a known wireless communication standard (for example, 3G, Long Term Evolution (LTE), 4G, 5G, or 6G). For example, the wide-area communication module 2 is a data communication module (DCM).

The short-range communication module 3 allows short-range wireless communication between the vehicle 1 and the portable terminal 200 of the user of the vehicle 1. The short-range communication module is a wireless module that complies with a short-range communication standard such as Bluetooth Low Energy (BLE) (R) and Near Field Communication (NFC), The portable terminal 200 can function as a digital key for the vehicle 1 by directly communicating with the vehicle 1 through the short-range communication module 3. That is, the user of the vehicle 1 can control a door lock of the vehicle 1, using the portable terminal 200.

The brake operation detection sensor 4 is provided at a brake pedal 41 of the vehicle 1, and detects the operation of the brake pedal 41 by the user of the vehicle 1. For example, the brake operation detection sensor 4 is configured as a pressure sensor that detects the pressure given to the brake pedal 41, an angle sensor that detects the rotation angle or displacement amount of the brake pedal 41, an electric switch that generates an on-off signal depending on the depressing operation of the brake pedal 41, or the like. The brake operation detection sensor 4 may be configured as a non-contact sensor such as an optical sensor or a magnetic sensor. The output of the brake operation detection sensor 4 is sent to the ECU 30.

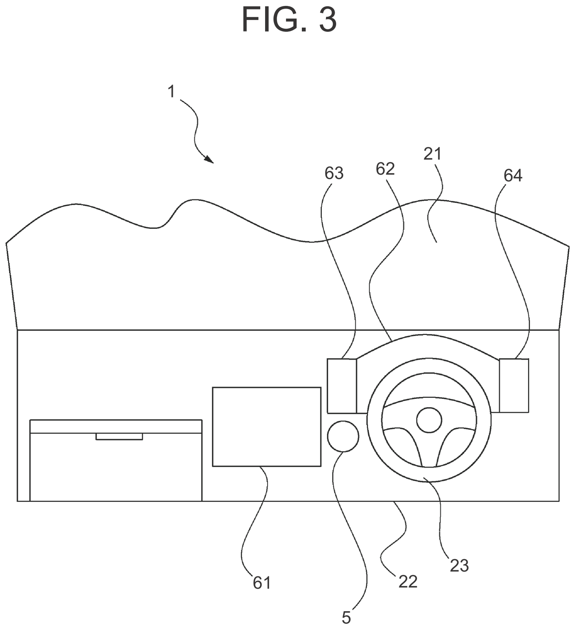

FIG. 3 is a diagram schematically showing an interior decoration of the vehicle 1 in front of a driver's seat and an assistant driver's seat. FIG. 3 shows the vehicle 1 with a right-hand steering wheel. As shown in FIG. 3, the start switch 5 is disposed on a dashboard 22 below a front windshield 21. For example, the start switch 5 is disposed at the vicinity of the driver's seat so as to be operated by the user (for example, a driver) of the vehicle 1, and specifically, is disposed at the vicinity of a steering wheel 23 (in the example of FIG. 3, on the left side of the steering wheel 23). For example, the start switch 5 is a push-type switch. By being pressed by the user of the vehicle 1, the start switch 5 outputs a signal in response to the pressing operation by the user. The output of the start switch 5 is output to the ECU 30.

The HMI 6 is provided in the vehicle cabin, and performs exchange of information between the vehicle 1 and the user of the vehicle 1. The HMI 6 includes an input apparatus that accepts an input from the user of the vehicle 1 and an output apparatus that gives a notice to the user of the vehicle 1. For example, the input apparatus includes at least one of a touch panel, an operation button, an operation switch, and a microphone. Information input to the input apparatus of the HMI 6 by the user of the vehicle 1 is sent to the ECU 30. The output apparatus includes at least one of a displaying device (for example, a display), a warning light, a speaker, a buzzer, and a vibration unit. The output apparatus of the HMI 6 gives a notice of information depending on a signal sent from the ECU 30, to the user of the vehicle 1.

As shown in FIG. 3, in the embodiment, the HMI 6 includes a multimedia display (referred to as an "MM display" hereinafter) 61, a meter display 62, a left-side operation display 63, and a right-side operation display 64. The displays are provided in the vehicle cabin (specifically, at the vicinity of the driver's seat), so as to be visually recognized by the user of the vehicle 1, and displays a variety of information to the user of the vehicle 1 based on signals sent from the ECU 30.

In the embodiment, the MM display 61 is embedded at a portion of the dashboard 22 between the driver's seat and the assistant driver's seat, that is, at a center console. In this case, the MM display 61 is also referred to as a center display. The MM display 61 is the largest display in the vehicle cabin, and displays multimedia information, map information, screens for a variety of settings of the vehicle 1, and the like. The MM display 61 is configured as a touch panel type liquid crystal display (LCD) or organic electroluminescence (EL) display that can be operated by the user of the vehicle 1. Accordingly, the MM display 61 functions as an input apparatus and an output apparatus.

The meter display 62 is disposed at a position that makes it easy for the meter display 62 to be visually recognized by the user of the vehicle 1 during the driving of the vehicle 1. Specifically, the meter display 62 is embedded as an instrument panel, on the dashboard 22 in front of the steering wheel 23, that is, on the dashboard 22 in front of the driver's seat. The meter display 62 displays state information about the vehicle 1, specifically, information necessary for the driving of the vehicle 1, as exemplified by the vehicle speed, the state-of-charge (SOC) of a main battery described later, and a warning light. The meter display 62 functions as an output apparatus, and is configured as an organic EL display, for example.

The left-side operation display 63 is disposed at a position that makes it easy for the left-side operation display 63 to be operated by the left hand of the user of the vehicle 1 during the driving of the vehicle 1, and the right-side operation display 64 is disposed at a position that makes it easy for the right-side operation display 64 to be operated by the right hand of the user of the vehicle 1 during the driving of the vehicle 1. The left-side operation display 63 and the right-side operation display 64 are disposed on both sides of the meter display 62, and are disposed at positions that are symmetric with respect to a line that divides the steering wheel 23 into a left half portion and a right half portion.

The left-side operation display 63 is disposed so as to be adjacent to the meter display 62 on the left side of the steering wheel 23. In the embodiment, the left-side operation display 63 displays an operation screen for a multimedia device (for example, a setting screen for an audio device). The left-side operation display 63 is configured as a touch panel type LCD or organic EL display that can be operated by the user of the vehicle 1. Accordingly, the left-side operation display 63 functions as an input apparatus and an output apparatus.

The right-side operation display 64 is disposed so as to be adjacent to the meter display 62 on the right side of the steering wheel 23. In the embodiment, the right-side operation display 64 displays an operation screen for a driving assistance function (for example, a setting screen for an adaptive cruise control (ACC)). The right-side operation display 64 is configured as a touch panel type LCD or organic EL display that can be operated by the user of the vehicle 1. Accordingly, the right-side operation display 64 functions as an input apparatus and an output apparatus.

In the embodiment, the left-side operation display 63 is connected to a left-side end portion of the meter display 62, and the right-side operation display 64 is connected to a right-side end portion of the meter display 62. That is, the left-side operation display 63 and the right-side operation display 64 are formed integrally with the meter display 62. However, the left-side operation display 63 and the right-side operation display 64 each may be separate from the meter display 62.

The air conditioner (referred to as an "AC" hereinafter) 7 includes an electric compressor, and provides an air cooling function and an air heating function. The AC 7 provides the air cooling function by decreasing the temperature of the vehicle cabin by a heat exchange process using a refrigerant, and provides the air heating function by increasing the temperature of the vehicle cabin by a heat pump technology.

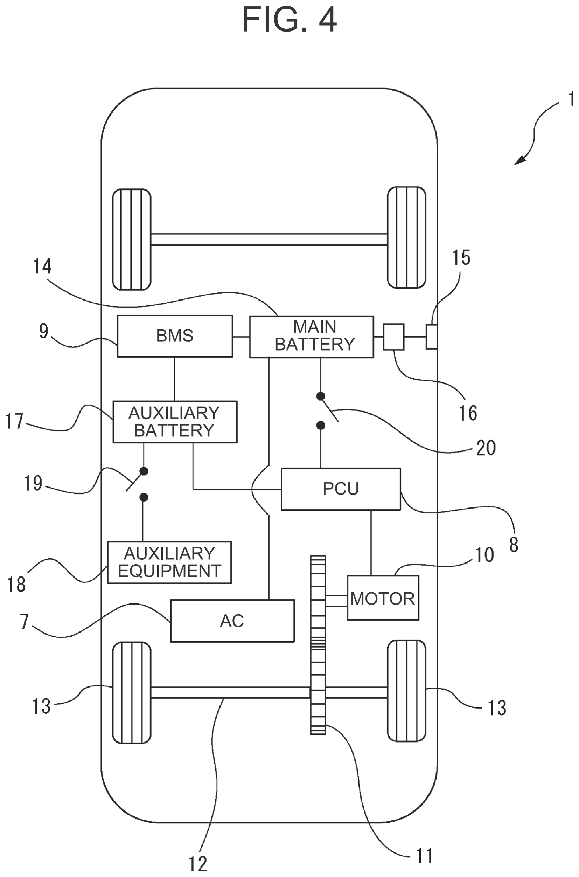

As shown in FIG. 2, the PCU 8 and the BMS 9 are electrically connected, and can communicate with each other using a communication protocol such as CAN. The configurations and functions of the PCU 8 and the BMS 9 will be described with reference to FIG. 4.

FIG. 4 is a diagram schematically showing the flow of electric power among electric components of the vehicle 1. As shown in FIG. 4, the vehicle 1 further includes a motor 10, a speed reducer 11, an axle 12, wheels 13, the main battery 14, a charging port 15, a charger 16, an auxiliary battery 17, auxiliary equipment 18, an auxiliary relay 19, and a main relay 20.

In the embodiment, the vehicle 1 is a so-called battery electric vehicle (BEV), and only the motor 10 functions as a drive device of the vehicle 1. The motor 10 is coupled to the speed reducer 11, and the output of the motor 10 is supplied to the speed reducer 11. The output of the motor 10 that is supplied to the speed reducer 11 is transmitted to wheels 13 through the axle 12, and drives the wheels 13. Accordingly, the motor 10 can output dynamic power for the traveling of the vehicle 1.

The main battery 14 is a secondary battery that can be charged, and is constituted by a lithium-ion battery, a nickel hydride battery, an all-solid-state battery, or a sodium-ion battery, for example. The main battery 14 is a high-voltage battery, and outputs direct-current electric power having a high voltage (for example, 200 V to 800 V). The main battery 14 is charged by electric power that is supplied from an external power supply such as a household power supply or a charging stand, or regenerative electric power that is generated at the time of the deceleration of the vehicle 1. The charging port 15 is configured so as to receive electric power from the external power supply, and the charger 16 converts the electric power supplied from the external power supply to the charging port 15, into electric power that can be supplied to the main battery 14. The main battery 14 is also referred to as a drive battery or a high-voltage battery.

When the motor 10 outputs the dynamic power for traveling, the electric power stored in the main battery 14 is supplied to the motor 10 through the PCU 8. That is, the main battery 14 functions as a drive source of the vehicle 1. Further, the main battery 14 is connected to the AC 7, and the electric compressor of the AC 7 is actuated by the high-voltage electric power that is supplied from the main battery 14.

The BMS 9 monitors and manages the main battery 14, and includes a sensor module, a control circuit, and the like. The sensor module includes a voltage sensor that detects the voltage of each cell of the main battery 14, a current sensor that detects the charge-discharge current of the main battery 14, and a temperature sensor that detects the temperature of the main battery 14. The control circuit performs the estimation of the state of the main battery 14, a charge-discharge control, and the like. For example, the control circuit calculates the state-of-charge (SOC), state-of-health (SOH), and state-of-power (SOP) of the main battery 14, based on outputs of the sensor module.

The auxiliary battery 17 is a secondary battery that can be charged, and is constituted by a lead storage battery or a lithium-ion battery, for example. The auxiliary battery 17 is a low-voltage battery, and outputs direct-current electric power having a low voltage (for example, 12 V). That is, the auxiliary battery 17 outputs electric power having a lower voltage than the main battery 14. The auxiliary battery 17 is charged by the electric power that is supplied from the main battery 14. The auxiliary battery 17 is also referred to as a low-voltage battery.

The auxiliary battery 17 is connected to the auxiliary equipment 18, and the auxiliary equipment 18 is actuated by the low-voltage electric power that is supplied from the auxiliary battery 17. The auxiliary equipment 18 includes communication modules such as the wide-area communication module 2 and the short-range communication module 3, sensors such as the brake operation detection sensor 4, the start switch 5, the HMI 6, illumination devices (a headlight, a taillight, and the like), a power window, and the like.

The auxiliary relay 19 is provided between the auxiliary battery 17 and the auxiliary equipment 18. That is, the auxiliary equipment 18 is connected to the auxiliary battery 17 through the auxiliary relay 19. When the auxiliary relay 19 is closed, the auxiliary battery 17 is electrically coupled with the auxiliary equipment 18. As a result, electric power can be supplied from the auxiliary battery 17 to the auxiliary equipment 18.

The PCU 8 controls the dynamic power of the vehicle 1, and includes an inverter, a DC-DC converter, a boost converter (step-up converter), a control circuit, and the like. The inverter is connected to the main battery 14 and the motor 10, and the main battery 14 supplies electric power to the motor 10 through the inverter. When electric power is supplied from the main battery 14 to the motor 10, the inverter converts the direct-current power supplied from the main battery 14, to alternating-current power. Further, the inverter controls the rotation speed and output torque of the motor 10, by adjusting the amount and frequency of the alternating-current electric power that is supplied to the motor 10. Meanwhile, when regenerative electric power is supplied from the motor 10 to the main battery 14, the inverter converts the alternating-current power supplied from the motor 10, into direct-current power.

The DC-DC converter is connected to the main battery 14 and the auxiliary battery 17, and the main battery 14 supplies electric power to the auxiliary battery 17 through the DC-DC converter. When electric power is supplied from the main battery 14 to the auxiliary battery 17, the DC-DC converter converts electric power having a high voltage (for example, 200 V to 800 V), into electric power having a low voltage (for example, 12 V). The boost converter raises the output of the main battery 14 as necessary. The control circuit performs an inverter control, a regenerative brake control, and the like.

The main relay 20 is provided between the main battery 14 and the PCU 8. That is, the PCU 8 is connected to the main battery 14 through the main relay 20. When the main relay 20 is closed, the main battery 14 is electrically coupled with the PCU 8. As a result, electric power can be supplied from the main battery 14 to the PCU 8. When electric power is supplied from the main battery 14 to the PCU 8, the DC-DC converter of the PCU 8 is actuated, and electric power can be supplied from the main battery 14 to the auxiliary battery 17 through the PCU 8. That is, the auxiliary battery 17 can be charged by the electric power output by the main battery 14.

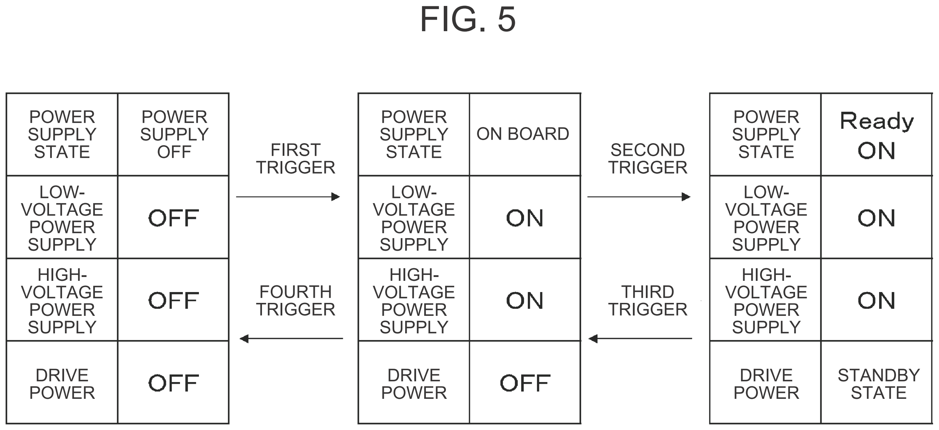

FIG. 5 is a diagram showing the transition of a power supply state in the vehicle 1. As shown in FIG. 5, as the power supply state, the vehicle 1 includes three states: Power Supply OFF, On Board, and Ready ON. As is obvious from the following description, in the case where the power supply state is "On Board", the user of the vehicle 1 (referred to as merely a "user" hereinafter) does not always need to exist in the vehicle cabin.

When the power supply state is Power Supply OFF, all of a low-voltage power supply, a high-voltage power supply, and a drive power are turned off. When the low-voltage power supply is in the off-state, the auxiliary relay 19 is opened, and the electric power supply between the auxiliary battery 17 and the auxiliary equipment 18 is blocked. When the high-voltage power supply is in the off-state, the main relay 20 is opened, and the electric power supply between the main battery 14 and the PCU 8 is blocked. When the drive power is in the off-state, an initialization operation (the self-diagnosis of a system, the initialization of an inverter, and the like) of a drive system by the PCU 8 has not been completed, and the electric power supply from the main battery 14 to the motor 10 has not been started.

When a first trigger occurs in the state where the power supply state is Power Supply OFF, the power supply state transitions from Power Supply OFF to On Board. In the embodiment, the first trigger is the opening of a door of the vehicle 1. Accordingly, when the user release a door lock of the vehicle 1 and opens the door of the vehicle 1 for getting in the vehicle 1, the power supply state of the vehicle 1 transitions from Power Supply OFF to On Board.

When the power supply state is On Board, the low-voltage power supply and the high-voltage power supply are turned on, and the drive power is maintained in the off-state. When the low-voltage power supply is turned on, that is, when the low-voltage power supply is activated, the ECU 30 closes the auxiliary relay 19 using the electric power output by the auxiliary battery 17, As a result, the electric power supply from the auxiliary battery 17 to the auxiliary equipment 18 is started.

When the high-voltage power supply is turned on, that is, when the high-voltage power supply is activated, the BMS 9 executes an initialization operation including the state checking of the main battery 14, and closes the main relay 20 using the electric power output by the auxiliary battery 17, after the completion of the initialization operation. As a result, the electric power supply from the main battery 14 to the PCU 8 is started.

Further, as shown in FIG. 4, the AC 7 is directly connected to the main battery 14, and therefore, when the high-voltage power supply is turned on, the electric power supply from the main battery 14 to the AC 7 is also started. In the case where the actuation state of the AC 7 is set to the off-state by the user, the electric power supply from the main battery 14 to the AC 7 is stopped even when the high-voltage power supply is in the on-state.

When a second trigger occurs in the state where the power supply state is On Board, the power supply state transitions from On Board to Ready ON. In the embodiment, the second trigger is the execution of a start operation of the vehicle 1 by the user, and as the start operation, two options are prepared. The first option is a complex operation in which a stepping operation of the brake pedal 41 and a pressing operation of the start switch 5 are combined, and the second option is a single operation that is the stepping operation of the brake pedal 41. The user selects one of the first option and the second option through the HMI 6 (for example, the MM display 61), as the start operation for starting the vehicle 1. In the embodiment, the start operation is set to the first option, in the vehicle 1 in the initial state (for example, the vehicle 1 at the time of shipment).

In the case where the first option is set as the start operation, when the user performs the complex operation in the first option, the power supply state transitions from On Board to Ready ON. On the other hand, in the case where the second option is set as the start operation, when the user performs the single operation in the second option, the power supply state transitions from On Board to Ready ON. As the start operation of the vehicle 1, only one operation method (for example, the first option or the second option) may be set.

When the power supply state is Ready ON, the low-voltage power supply and the high-voltage power supply are turned on, and the drive power is put into a standby state. Therefore, for causing the power supply state of the vehicle 1 to transition to Ready ON, the PCU 8 executes the initialization operation of the drive system, and puts the drive power into the standby state. When the drive power is in the standby state, the initialization operation of the drive system by the PCU 8 has been completed, but the electric power supply from the main battery 14 to the motor 10 has not been started. In this state, when the user sets a gearshift of the vehicle 1 to a drive (D) mode or a reverse (R) mode while stepping on the brake pedal 41, the drive power is turned on, and the electric power supply from the main battery 14 to the motor 10 is started.

Meanwhile, when the user sets the gearshift of the vehicle 1 to a parking (P) mode after the traveling of the vehicle 1, the drive power is changed from the on-state to the standby state, and the electric power supply from the main battery 14 to the motor 10 is stopped. In this state, when a third trigger occurs, the drive power is changed from the standby state to the off-state, and the power supply state transitions from Ready ON to On Board. That is, when the third trigger occurs in the state where the power supply state is Ready ON, the power supply state transitions from Ready ON to On Board. In the embodiment, the third trigger is the pressing of the start switch 5 by the user. Accordingly, when the user presses the start switch 5 after setting the gearshift of the vehicle 1 to the parking mode, the power supply state transitions from Ready ON to the On Board.

When a fourth trigger occurs in the state where the power supply state is On Board, the power supply state transitions from On Board to Power Supply OFF. In the embodiment, the fourth trigger is the locking of the door of the vehicle 1 from the outside of the vehicle 1 or a state where the vehicle 1 has not been operated for a threshold time or more. Accordingly, when the user gets out of the vehicle 1 and locks the door of the vehicle 1, the power supply state transitions from On Board to Power Supply OFF. Further, the power supply state transitions from On Board to Power Supply OFF, also in a situation where the vehicle 1 is left in a state where the door lock of the vehicle 1 is released or in a situation where the user sleeps in the stopped vehicle 1. The threshold time (for example, 30 minutes to 80 minutes) when a key of the vehicle 1 is in the interior of the vehicle 1 and the threshold time (for example, 3 minutes to 10 minutes) when the key of the vehicle 1 is in the exterior of the vehicle 1 may be different from each other.

When the vehicle 1 is in the state of Power Supply OFF, naturally, the user cannot use the HMI 6 and the AC 7 in the vehicle cabin. On the other hand, when the power supply state is On Board, it is possible to use the HMI 6 and the AC 7, while avoiding the electric power consumption for the drive of the vehicle 1. Therefore, there is a possibility that the user wants to fix the power supply state to On Board in some situations when the vehicle 1 is at a standstill. Examples of the situations include a situation where the user watches a desired content on the MM display 61, a situation where the user uses the vehicle 1 as a lodging place, and a situation where the user performs camp in the exterior of the vehicle 1. In these situations, it is desirable to maintain the actuation of the AC 7 without turning off the power supply of the vehicle 1, and to keep the vehicle cabin at a comfortable temperature.

Therefore, in the embodiment, a state keeping mode in which electric power is supplied to the AC of the vehicle 1 and displays in the vehicle 1 but electric power is not supplied to the drive system of the vehicle 1 is prepared as a mode of the vehicle 1 that can be selected by the user. This allows the user to enjoy the above situations in a comfortable vehicle cabin environment, and can enhance the usability of the vehicle 1.

In the embodiment, a vehicle state where the power supply state is set to On Board corresponds to the vehicle state where electric power is supplied to the AC of the vehicle 1 and the displays in the vehicle 1 but electric power is not supplied to the drive system of the vehicle 1. That is, in the state keeping mode, the power supply state is fixed to On Board, and even when the fourth trigger occurs, the power supply state does not transition from On Board to Power Supply OFF. In other words, in the state keeping mode, the transition of the power supply state from On Board to Power Supply OFF is disabled. The displays (in the embodiment, the MM display 61, the meter display 62, the left-side operation display 63, and the right-side operation display 64) of the HMI 6 are examples of the displays in the vehicle 1.

In the embodiment, the ECU 30 functions as a display control device that controls at least one display in the vehicle 1.

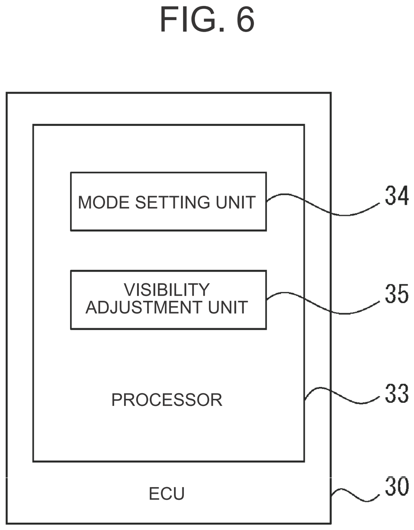

FIG. 6 is a functional block diagram of the processor 33 of the ECU 30. As shown in FIG. 6, the processor 33 includes a mode setting unit 34 and a visibility adjustment unit 35. The mode setting unit 34 and the visibility adjustment unit 35 are functional modules that are realized when the processor 33 of the ECU 30 executes computer programs stored in the memory 32 of the ECU 30. The functional modules each may be realized by dedicated arithmetic circuits provided in the processor 33. The ECU 30 is an example of the display control device.

The mode setting unit 34 sets the mode of the vehicle 1. Particularly, in the embodiment, based on an instruction from the user, the mode setting unit 34 sets the mode of the vehicle 1 to the state keeping mode in which the vehicle state where the power supply state of the vehicle 1 has been set to On Board is kept. For example, the user gives an instruction about the mode of the vehicle 1, through the HMI 6. As a specific example, the user gives the instruction about the mode of the vehicle 1, by operating a mode selection screen that is displayed on the MM display 61 of the HMI 6. In this case, when the user selects a mode selection icon for the state keeping mode, the mode setting unit 34 sets the mode of the vehicle 1 to the state keeping mode. The user may give the instruction about the mode of the vehicle 1 through another display (for example, the meter display 62, the left-side operation display 63, or the right-side operation display 64) of the HMI 6. Further, the user may give the instruction about the mode of the vehicle 1 through the HMI 6 by voice input or the like.

When a predetermined condition is satisfied in the state keeping mode, the mode setting unit 34 ends the state keeping mode. In the embodiment, the predetermined condition includes first to fifth end conditions described below, and when one of the first to fifth end conditions is satisfied, the mode setting unit 34 ends the state keeping mode.

The first end condition is a condition that the SOC of the main battery 14 has decreased to a predetermined threshold. In this case, when the SOC of the main battery 14 that is calculated by the BMS 9 has decreased to the predetermined threshold, the mode setting unit 34 ends the state keeping mode. The threshold is previously determined, and is set to a value of 10% to 30%, for example. By providing the first end condition as the end condition for the state keeping mode, it is possible to restrain the vehicle 1 from becoming out of electricity due to the continuous execution of the state keeping mode.

The second end condition is a condition that an abnormality has been detected in the vehicle 1. In this case, when the abnormality has been detected in the vehicle 1, the mode setting unit 34 ends the state keeping mode. Examples of the abnormality of the vehicle 1 include an abnormality that is detected by the self-diagnosis of the vehicle 1, and a communication blackout. By providing the second end condition as the end condition for the state keeping mode, it is possible to restrain the state keeping mode from being continued in the state of the abnormality of the vehicle 1.

The third end condition is a condition that the user has requested the end of the state keeping mode through the HMI 6. In this case, when the user has requested the end of the state keeping mode through the HMI 6, the mode setting unit 34 ends the state keeping mode. For example, the user requests the end of the state keeping mode by operating the MM display 61 of the HMI 6 (for example, by selecting an end button displayed on the MM display 61). Further, the third end condition may be a condition that the user has requested the end of the state keeping mode through the portable terminal 200, In this case, the notice of the end request is sent from the portable terminal 200 to the vehicle 1 through the server 300.

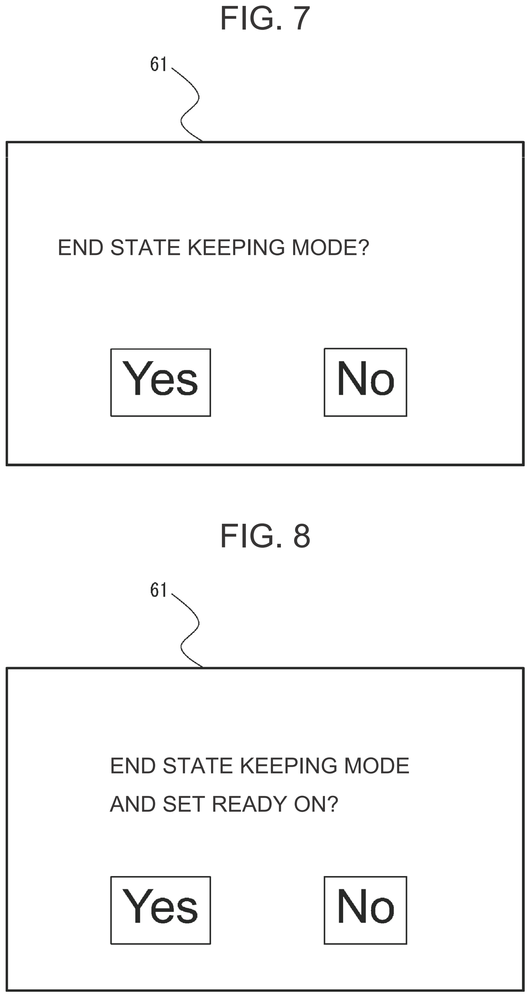

The fourth end condition is a condition that the user has pressed the start switch 5. In this case, when the user has pressed the start switch 5, the mode setting unit 34 ends the state keeping mode. In order to avoid the state keeping mode from being ended with no intention of the user due to an erroneous operation of the start switch 5, the fourth end condition may be a condition that the user has pressed the start switch 5 and the user has approved the end of the state keeping mode. In this case, the user approves the end of the state keeping mode through the HMI 6. As a specific example, when the start switch 5 is pressed, the mode setting unit 34 displays a confirmation screen for confirming whether the end of the state keeping mode is performed, on the HMI 6 (for example, the MM display 61), and the user selects whether the end is performed, through the HMI 6. FIG. 7 shows an example of the confirmation screen for confirming whether the end of the state keeping mode is performed.

The fifth end condition is a condition that the user has executed the start operation of the vehicle 1. In this case, when the user has executed the start operation, the mode setting unit 34 ends the state keeping mode. The user performs both of the stepping operation of the brake pedal 41 and the pressing operation of the start switch 5 when the first option is set as the start operation, and performs only the stepping operation of the brake pedal 41 when the second option is set as the start operation.

When the second option is set as the start operation, in order to avoid the state keeping mode from being ended with no intention of the user due to an erroneous operation of the brake pedal 41, the fifth condition may be a condition that the user has stepped on the brake pedal 41 and the user has approved the transition of the power supply state. In this case, the user approves the transition of the power supply state from the On Board to Ready ON through the HMI 6. As a specific example, when the user steps on the brake pedal 41, the mode setting unit 34 displays a confirmation screen for confirming whether the transition of the power supply state is performed, on the HMI 6 (for example, the MM display 61), and the user selects whether the transition of the power supply state is performed, through the HMI 6. FIG. 8 shows an example of the confirmation screen for confirming whether the transition of the power supply state is performed.

As described above, in the state keeping mode, electric power can be supplied to the display in the vehicle 1, and the user can watch a desired content on the display. However, there can be a situation where the user does not want to use the display (for example, a situation where the user uses the vehicle 1 as a lodging place), and particularly, there is a need for the adjustment of the illumination state of the meter display 62 that is expected to always perform displaying.

Hence, in the embodiment, the visibility adjustment unit 35 decreases the visibility of at least one display in the vehicle 1 that includes the meter display 62, in response to a user input from the user. Thereby, it is possible to adjust the illumination state of in-vehicle displays including the meter display 62, depending on user's desire, and moreover, it is possible to enhance the usability of the vehicle 1.

For example, the visibility adjustment unit 35 generates a black image on the meter display 62, and thereby, turns off the light of the meter display 62. In this case, the visibility adjustment unit 35 generates the black image on the meter display 62, by turning off the light emission of R, G, and B sub-pixels of the meter display 62. In the embodiment, the meter display 62 is configured as an organic EL display, and therefore, it is possible to cause the illumination state of the meter display 62 to be darker, compared to an LCD including a backlight.

Further, when the visibility of the meter display 62 has been decreased, the visibility adjustment unit 35 restores the visibility of the meter display 62 due to the operation of the MM display 61 by the user. Thereby, the user can easily restore the visibility of the meter display 62 through the MM display 61 that is easily operated by the user.

Further, in the embodiment, the visibility adjustment unit 35 permits the decrease in the visibility of at least one display including the meter display 62, only when the mode of the vehicle 1 has been set to the state keeping mode. Thereby, it is possible to avoid the visibility of the display from being decreased in a vehicle state (for example, a traveling state) that is not intended by the user.

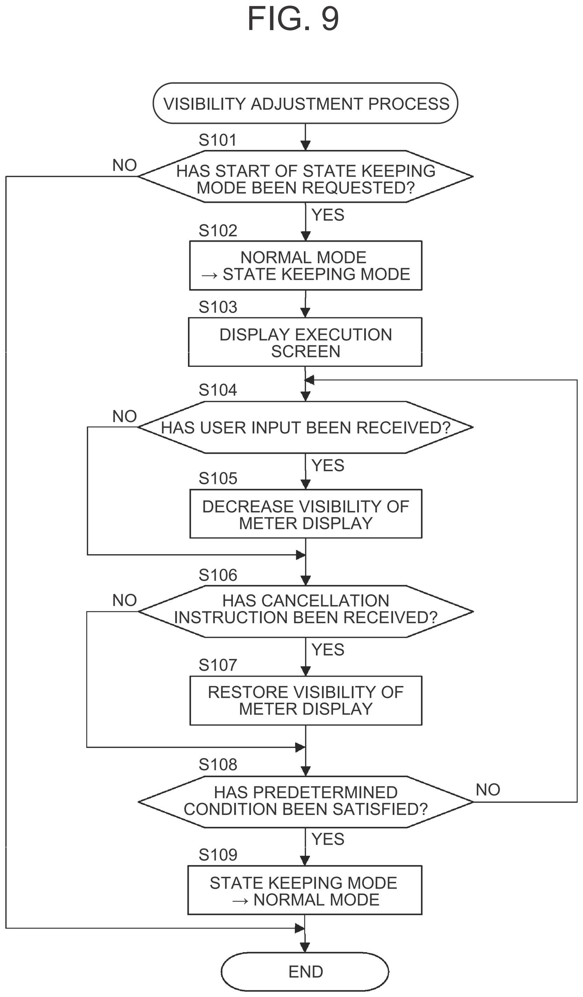

The flow of a process when the above-described display control is executed will be described below with reference to FIG. 9. FIG. 9 is a flowchart showing a control routine of a visibility adjustment process in the first embodiment of the present invention. The control routine is repeatedly executed by the processor 33 of the ECU 30, in accordance with a computer program stored in the memory 32 of the ECU 30.

First, in step S101, the mode setting unit 34 of the processor 33 determines whether the start of the state keeping mode has been requested by the user. For example, when the mode selection icon for the state keeping mode on the HMI 6 (for example, the MM display 61) has been selected, the mode setting unit 34 determines that the start of the state keeping mode has been requested. In the case where it is determined that the start of the state keeping mode has not been requested, the control routine ends. On the other hand, in the case where it is determined that the start of the state keeping mode has been requested, the control routine proceeds to step S102.

In step S102, the mode setting unit 34 executes the state keeping mode, and changes the mode of the vehicle 1 from a normal mode to the state keeping mode. In the normal mode, the power supply state of the vehicle 1 is set in accordance with the transition of the power supply state described above with reference to FIG. 5. For example, when the fourth trigger occurs in the state where the power supply state is On Board, the power supply state transitions from On Board to Power Supply OFF. On the other hand, in the state keeping mode, even when the fourth trigger occurs, the power supply state does not transition from On Board to Power Supply OFF.

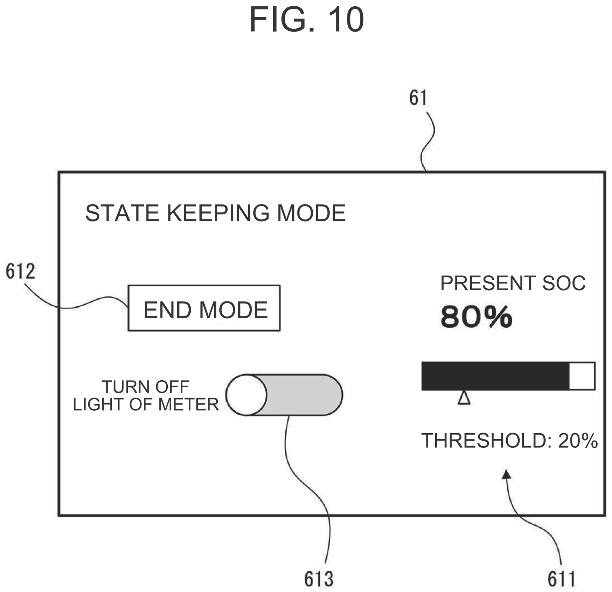

Next, in step S103, the visibility adjustment unit 35 of the processor 33 displays an execution screen for the state keeping mode, on the HMI 6 (for example, the MM display 61). FIG. 10 is a diagram showing an exemplary execution screen for the state keeping mode in the first embodiment. In the example of FIG. 10, the execution screen for the state keeping mode includes an SOC display portion 611 where the present value (80%) and threshold (20%) of the SOC of the main battery 14 are displayed, an end button 612 for ending the state keeping mode, a toggle switch 613 for turning off the light of the meter display 62.

When the user gives an instruction to turn off the light of the meter display 62, the user operates the toggle switch 613. Accordingly, the operation of the toggle switch 613 is an example of the user input for the instruction to turn off the light of the display in the vehicle 1. In the execution screen shown in FIG. 10, the toggle switch 613 has been turned off. The user input may be performed by another input method such as voice input.

After step S103, in step S104, the visibility adjustment unit 35 determines whether the user input has been received through the HMI 6. For example, when the toggle switch 613 has been turned on by user's operation, the visibility adjustment unit 35 determines that the user input has been received.

In the case where it is determined in step S104 that the user input has been received, the control routine proceeds to step S105. In step S105, the visibility adjustment unit 35 decreases the visibility of the meter display 62. Specifically, the visibility adjustment unit 35 generates the black image on the meter display 62, and thereby, turns off the light of the meter display 62. After step S105, the control routine proceeds to step S106.

On the other hand, in the case where it is determined in step S104 that the user input has not been received, the control routine skips step S105 and proceeds to step S106. In step S106, the visibility adjustment unit 35 determines whether a cancellation instruction as an instruction to cancel the light-out of the meter display 62, that is, turn on the light of the meter display 62 has been received through the HMI 6. For example, when the toggle switch 613 has been turned off by user's operation, the visibility adjustment unit 35 determines that the cancellation instruction has been received.

In the case where it is determined in step S106 that the cancellation instruction has been received, the control routine proceeds to step S107. In step S107, the visibility adjustment unit 35 restores the visibility of the meter display 62. Specifically, the visibility adjustment unit 35 cancels the light-out of the meter display 62, and turns on the light of the meter display 62. After step S107, the control routine proceeds to step S108.

On the other hand, in the case where it is determined in step S106 that the cancellation instruction has not been received, the control routine skips step S107 and proceeds to step S108. In step S108, the mode setting unit 34 determines whether a predetermined condition has been satisfied. In the embodiment, the mode setting unit 34 determines whether one of the above-described first to fifth end conditions has been satisfied. For example, when the end button 612 on the execution screen for the state keeping mode has been selected (pressed), the mode setting unit 34 determines that the third end condition has been satisfied. In the case where it is determined that any of the first to fifth end conditions has not been satisfied, the control routine returns to step S104.

On the other hand, in the case where it is determined in step S108 that one of the first to fifth end conditions has been satisfied, the control routine proceeds to step S109. In step S109, the mode setting unit 34 ends the state keeping mode, and changes the mode of the vehicle 1 from the state keeping mode to the normal mode. After step S109, the control routine ends.

In step S105, the visibility adjustment unit 35 may turn off at least one of the MM display 61, the left-side operation display 63, and the right-side operation display 64, in addition to the meter display 62. For example, the visibility adjustment unit 35 generates black images on the MM display 61, the left-side operation display 63, and the right-side operation display 64, and thereby, turns off the light of the displays. In the case where the light of the MM display 61 is turned off, for example, when the user has touched the MM display 61 in the light-out state, the visibility adjustment unit 35 determines that a cancellation instruction as an instruction to cancel the light-out of the MM display 61 and the meter display 62 has been received.

The visibility adjustment unit 35 may decrease the visibility of the meter display 62, by decreasing the luminance of the meter display 62. In this case, the visibility adjustment unit 35 decreases the luminance of the meter display 62, by decreasing the supply current to R, G, and B sub-pixels of the meter display 62. Similarly, the visibility adjustment unit 35 may decrease the visibilities of the MM display 61, the left-side operation display 63, and the right-side operation display 64, by decreasing the luminances of the displays.

When the state keeping mode is not being executed, the visibility adjustment unit 35 may perform the gray-out of the display content about a light-out instruction that includes the toggle switch 613. Thereby, the user can recognize that the turning-off of the light of the display is not permitted.

### Second Embodiment

The configuration and control of a display control device according to a second embodiment are basically the same as the configuration and control of the display control device according to the first embodiment, except points described below. Therefore, as for the second embodiment of the present invention, different portions from the first embodiment will be mainly described below.

In the second embodiment, the user input for the instruction to turn off the light of the display in the vehicle 1 includes a first user input for an instruction to turn off the light of a first display group and a second user input for an instruction to turn off the light of a second display group. In the embodiment, the first display group includes the meter display 62, the left-side operation display 63, and the right-side operation display 64, and the second display group includes all displays (in the embodiment, the MM display 61, the meter display 62, the left-side operation display 63, and the right-side operation display 64) disposed in front of the driver's seat of the vehicle 1.

The visibility adjustment unit 35 decreases the visibility of the first display group in response to the first input, and decreases the visibility of the second display group in response to the second user input. Accordingly, in the embodiment, the user can selectively darken a desired display in the vehicle 1. For example, when the user watches a content on the MM display 61, the user can decrease the visibility of the first display group by performing the first user input. Thereby, it is possible to watch the content on the MM display 61, while reducing the whole electric power consumption amount of the displays in the vehicle 1. Further, by darkening the illumination from displays other than the MM display 61, it is possible to make an environment suitable for watching the content on the MM display 61. Further, when the user uses the vehicle 1 as a lodging place, the user can decrease the visibility of the second display group by performing the second user input. Thereby, it is possible to make a state suitable for the sleep in the vehicle cabin.

Since the first display group does not include the MM display 61, when the visibility of the first display group has been decreased, the displaying of the MM display 61 is maintained. Therefore, when the visibility of the first display group has been decreased, the visibility adjustment unit 35 restores the visibility of the first display group due to the operation of the MM display 61 by the user. Thereby, the user can easily restore the visibility of the first display group through the MM display 61 that is easily operated by the user.

On the other hand, when the visibility of the second display group has been decreased, the light of the MM display 61 has been turned off. However, a slight amount of electric power that allows the MM display 61 to detect user's operation is supplied to the MM display 61. Therefore, when the visibility of the second display group has been decreased, the visibility adjustment unit 35 restores the visibility of the second display group due to the operation of the MM display 61 by the user. Thereby, the user can easily restore the visibility of the second display group through the MM display 61 that is easily operated by the user.

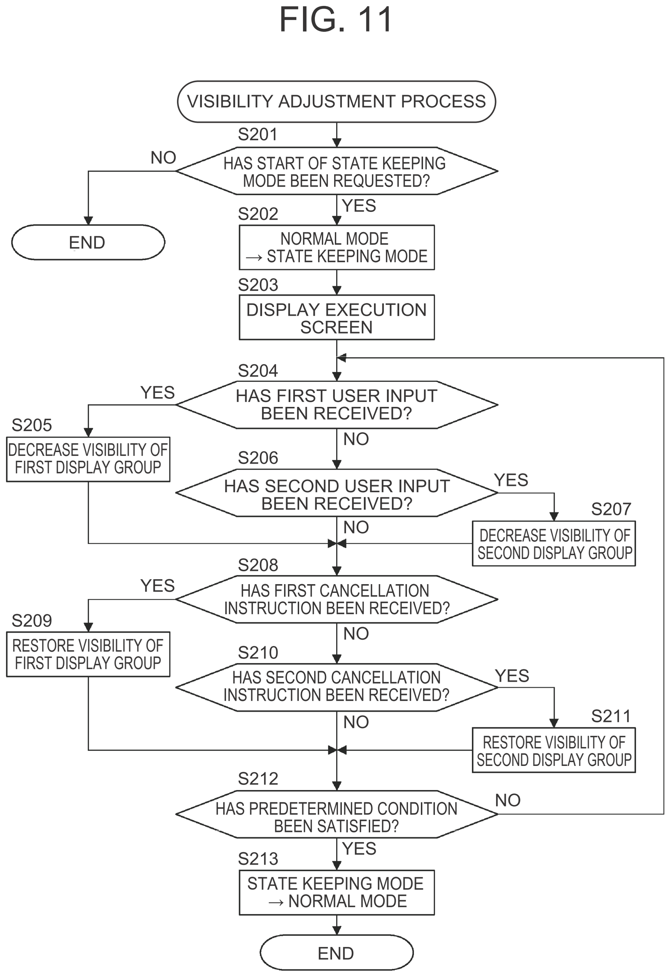

FIG. 11 is a flowchart showing a control routine of a visibility adjustment process in the second embodiment of the present invention. The control routine is repeatedly executed by the processor 33 of the ECU 30, in accordance with a computer program stored in the memory 32 of the ECU 30.

First, in step S201, the mode setting unit 34 of the processor 33 determines whether the start of the state keeping mode has been requested by the user. In the case where it is determined that the start of the state keeping mode has not been requested, the control routine ends. On the other hand, in the case where it is determined that the start of the state keeping mode has been requested, the control routine proceeds to step S202.

In step S202, the mode setting unit 34 executes the state keeping mode, and changes the mode of the vehicle 1 from the normal mode to the state keeping mode.

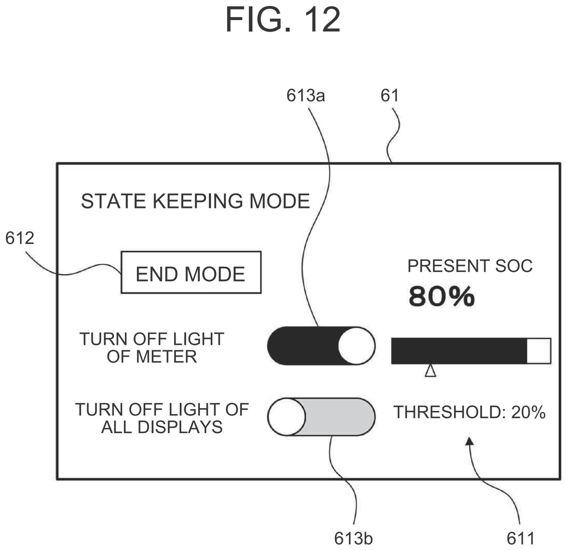

Next, in step S203, the visibility adjustment unit 35 of the processor 33 displays an execution screen for the state keeping mode, on the HMI 6 (for example, the MM display 61). FIG. 12 is a diagram showing an exemplary execution screen for the state keeping mode in the second embodiment. In the example of FIG. 12, the execution screen for the state keeping mode includes the SOC display portion 611 where the present value (80%) and threshold (20%) of the SOC of the main battery 14 are displayed, the end button 612 for ending the state keeping mode, a first toggle switch 613a, and a second toggle switch 613b.

The user operates the first toggle switch 613a when the user gives the instruction to turn off the light of the first display group, and operates the second toggle switch 613b when the user gives the instruction to turn off the light of the second display group. Accordingly, the operation of the first toggle switch 613a is an example of the first user input, and the operation of the second toggle switch 613b is an example of the second user input. In the execution screen shown in FIG. 12, the first toggle switch 613a has been turned on, and the second toggle switch 613b has been turned off. At least one of the first user input and the second user input may be performed by another input method such as voice input.

After step S203, in step S204, the visibility adjustment unit 35 determines whether the first user input has been received through the HMI 6. For example, when the first toggle switch 613a has been turned on by user's operation, the visibility adjustment unit 35 determines that the first user input has been received.

In the case where it is determined in step S204 that the first user input has been received, the control routine proceeds to step S205. In step S205, the visibility adjustment unit 35 decreases the visibility of the first display group. Specifically, the visibility adjustment unit 35 generates black images on the meter display 62, the left-side operation display 63, and the right-side operation display 64, and thereby, turns off the light of the displays.

On the other hand, in the case where it is determined in step S204 that the first user input has not been received, the control routine proceeds to step S206. In step S206, the visibility adjustment unit 35 determines whether the second user input has been received through the HMI 6. For example, when the second toggle switch 613b has been turned on by user's operation, the visibility adjustment unit 35 determines that the second user input has been received.

In the case where it is determined in step S206 that the second user input has been received, the control routine proceeds to step S207. In step S207, the visibility adjustment unit 35 decreases the visibility of the second display group. Specifically, the visibility adjustment unit 35 generates black images on the MM display 61, the meter display 62, the left-side operation display 63, and the right-side operation display 64, and thereby, turns off the light of the displays.

On the other hand, in the case where it is determined in step S206 that the second user input has not been received, the control routine proceeds to step S208. After step S205 or step S207, the control routine proceeds to step S208.

In step S208, the visibility adjustment unit 35 determines whether a first cancellation instruction as an instruction to cancel the light-out of the first display group, that is, turn on the light of the first display group has been received through the HMI 6. For example, when the first toggle switch 613a has been turned off by user's operation, the visibility adjustment unit 35 determines that the first cancellation instruction has been received.

In the case where it is determined in step S208 that the first cancellation instruction has been received, the control routine proceeds to step S209. In step S209, the visibility adjustment unit 35 restores the visibility of the first display group. Specifically, the visibility adjustment unit 35 cancels the light-out of the meter display 62, the left-side operation display 63, and the right-side operation display 64, and turns on the light of the displays.

On the other hand, in the case where it is determined in step S208 that the first cancellation instruction has not been received, the control routine proceeds to step S210. In step S210, the visibility adjustment unit 35 determines whether a second cancellation instruction as an instruction to cancel the light-out of the second display group, that is, turn on the light of the second display group has been received through the HMI 6. For example, when the user has touched the MM display 61 in the light-out state, the visibility adjustment unit 35 determines that the second cancellation instruction has been received.

In the case where it is determined in step S210 that the second cancellation instruction has been received, the control routine proceeds to step S211. In step S211, the visibility adjustment unit 35 restores the visibility of the second display group. Specifically, the visibility adjustment unit 35 cancels the light-out of the MM display 61, the meter display 62. the left-side operation display 63, and the right-side operation display 64, and turns on the light of the displays.

On the other hand, in the case where it is determined in step S210 that the second cancellation instruction has not been received, the control routine proceeds to step S212. Further, after step S209 or step S211, the control routine proceeds to step S212.

In step S212, the mode setting unit 34 determines whether the predetermined condition has been satisfied. In the case where it is determined that any of the first to fifth end conditions has not been satisfied, the control routine returns to step S204.

On the other hand, in the case where it is determined in step S212 that one of the first to fifth end conditions has been satisfied, the control routine proceeds to step S213. In step S213, the mode setting unit 34 ends the state keeping mode, and changes the mode of the vehicle 1 from the state keeping mode to the normal mode. After step S213, the control routine ends.

In step S205, the visibility adjustment unit 35 may decrease the visibilities of the meter display 62, the left-side operation display 63, and the right-side operation display 64, by decreasing the luminances of the displays. Similarly, in step S207, the visibility adjustment unit 35 may decrease the visibilities of the MM display 61, the meter display 62, the left-side operation display 63, and the right-side operation display 64, by decreasing the luminances of the displays.

Further, in step S210, when the user has touched the left-side operation display 63 or right-side operation display 64 in the light-out state, the visibility adjustment unit 35 may determine that the second cancellation instruction has been received. That is, when the visibility of the second display group has been decreased, the visibility adjustment unit 35 may restore the visibility of the second display group due to the operation of the left-side operation display 63 or right-side operation display 64 by the user.

Further, when the state keeping mode is not being executed, the visibility adjustment unit 35 may perform the gray-out of the display content about light-out instructions that includes the first toggle switch 613a and the second toggle switch 613b. Thereby, the user can recognize that the turning-off of the light of the displays is not permitted.

### Third Embodiment

The configuration and control of a display control device according to a third embodiment are basically the same as the configuration and control of the display control device according to the first embodiment, except points described below. Therefore, as for the third embodiment of the present invention, different portions from the first embodiment will be mainly described below.

In the third embodiment, the meter display 62 includes a plurality of layers respectively corresponding to display items that are displayed on the meter display 62. For example, a first layer displays a first display item, and a second layer displays a second display item. The visibility adjustment unit 35 can independently control the displaying of the layers. For example, the visibility adjustment unit 35 generates the black image on some layers of the layers, and thereby, decreases the visibility of the meter display 62. Thereby, it is possible to darken the illumination state of the meter display 62, while displaying necessary display items on the meter display 62.

In some cases, laws and the like require that predetermined display items are displayed on the meter display 62. For example, "5.3.6. Brightness of Tell-Tale Illumination" of Regulation No. 121 prescribes "Means shall be provided for making tell-tales and their identification visible and recognisable to the driver under all driving conditions". In response, in the third embodiment, some layers on which black images are generated do not include a layer on which a tell-tale is displayed. Therefore, it is possible to darken the illumination state of the meter display 62, while surely complying with the above law relevant to the tell-tale.

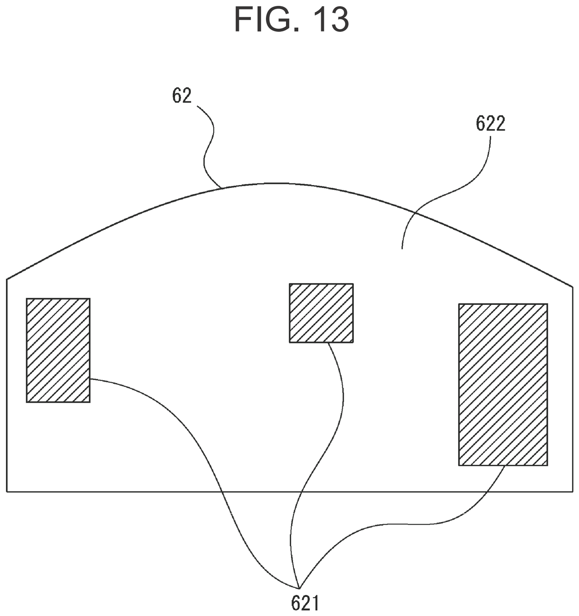

FIG. 13 is a diagram schematically showing the display screen of the meter display 62 that includes the layers. In FIG. 13, a first display region 621 and a second display region 622 are shown on the meter display 62. The first display region 621 is shown by hatching. The first display region 621 and the second display region 622 are disposed at different positions on the screen of the meter display 62. On the first display region 621, tell-tales are displayed as first display items, and on the second display region 622, display items other than the tell-tales are displayed as second display items.

In the example in FIG. 13, the meter display 62 includes a first layer having the first display region 621 and a second layer having the second display region 622. On the first layer, R, G, and B sub-pixels are provided at the first display region 621, and the visibility adjustment unit 35 controls the displaying of the fist layer, by controlling the current supply to the sub-pixels at the first display region 621. Accordingly, the visibility adjustment unit 35 displays tell-tales on the first layer, by supplying current to the sub-pixels at the first display region 621.

On the second layer, R, G, and B sub-pixels are provided at the second display region 622, and the visibility adjustment unit 35 controls the displaying of the second layer, by controlling the current supply to the sub-pixels at the second display region 622. Accordingly, the visibility adjustment unit 35 displays display items other than tell-tales, on the second layer, by supplying current to the sub-pixels at the second display region 622.

For example, the display item for the tell-tale includes at least one of display items for a master lighting switch, a headlamp (downward), a headlamp (upward), a main beam of a headlamp, an automatic main beam, a direction indicator, a hazard warning, a fog lamp, a rear fog lamp, a fuel warning light, an oil-pressure warning light, a low-coolant-temperature warning light, a charge warning light, a windshield defrost, a windshield defrost system, a rear window defrost, a rear window defrost system, a position, a side maker and/or end-outline marker lamp, a parking lamp, a seatbelt warning light, an SRS airbag warning light, a side airbag abnormality, an assistant driver's seat airbag-off, a brake warning light, an ABS warning light, a parking brake, an engine on-board diagnosis, an engine abnormality, a diesel pre-warming, a choke (cold start device), a brake lining abrasion state, a low tire pressure, and an antiskid brake system. On the other hand, for example, the display item other than the tell-tale includes at least one of display items for vehicle speed, time, outside temperature, odometer, and the SOC of the main battery 14.

In the case where the meter display 62 includes the above first layer and the above second layer, the visibility adjustment unit 35 can decrease the visibility of the meter display 62, by generating a black image on the second layer. At this time, the visibility adjustment unit 35 generates the black image on the second layer, by turning off the light emission of the sub-pixels at the second display region 622. On the other hand, the visibility adjustment unit 35 displays tell-tales on the first layer, depending on the state of the vehicle 1. That is, the visibility adjustment unit 35 decreases the visibility of the meter display 62, while maintaining the displaying of tell-tales on the meter display 62. For example, even when the instruction to turn off the light of the meter display 62 is given during the execution of the state keeping mode, the visibility adjustment unit 35 displays at least the parking lamp, or at least the parking lamp and the parking brake, on the meter display 62, as tell-tales.

The disposition of the first display region 621 or the second display region 622 shown in FIG. 13 is just an example, and another disposition may be adopted. For example, the first display region 621 may be a continuous region, instead of being constituted by a plurality of regions separated from each other. Further, the meter display 62 may include three or more layers. In this case, the screen of the meter display 62 is allocated for the layer display regions.

In the third embodiment, the control routine of the visibility adjustment process in FIG. 9 is executed similarly to the first embodiment. At this time, when the visibility adjustment unit 35 decreases the visibility of the meter display 62 in step S105, the visibility adjustment unit 35 displays tell-tales on the meter display 62, and therewith, turns off the displaying of display items other than the tell-tales.

The visibility adjustment unit 35 may decrease the visibility of the meter display 62, by decreasing the luminance of the meter display 62, For example, the visibility adjustment unit 35 decreases the luminances of all layers of the meter display 62, by decreasing the supply current to R, G, and B sub-pixels of the meter display 62. Even in this case, at the first display region 621 of the first layer, tell-tales are displayed at a luminance level allowing visual recognition. Further, the visibility adjustment unit 35 may decrease the luminance of a layer (for example, the second layer) other than the first layer on which tell-tales are displayed.

### Other Embodiments

Preferred embodiments according to the present invention have been described above. The present invention is not limited to the embodiments, and various modifications and changes can be made within the scope of the description in the claims. For example, the AC 7 may be included in the auxiliary equipment 18, and may receive electric power from the auxiliary battery 17.

Further, the vehicle 1 may be a plug-in hybrid electric vehicle (PHEV) that includes a motor and an engine as drive devices, or the like. Further, the vehicle 1 may be an autonomous driving vehicle in which at least a part of the acceleration, braking, and steering of the vehicle 1 is automatically executed.

Further, in the above-described embodiments, it has been described that the screen relevant to the state keeping mode is displayed on the MM display 61 in the vehicle 1, but the screen may be displayed on another display (for example, the meter display 62, the left-side operation display 63, the right-side operation display 64, or an unillustrated head-up display (HUD)) in the vehicle 1. Further, at least one of the left-side operation display 63 and the right-side operation display 64 may be excluded from the vehicle 1. In the case where both of the left-side operation display 63 and the right-side operation display 64 are excluded, the first display group in the second embodiment includes only the meter display 62.

Further, the meter display 62 may be configured as a liquid crystal display (LCD). In this case, the visibility adjustment unit 35 generates the black image on the meter display 62, for example, by blocking the light of the backlight using liquid crystals. Further, in the case where the visibility of the meter display 62 is decreased by decreasing the luminance of the meter display 62, the visibility adjustment unit 35 decreases the luminance of the meter display 62, for example, by decreasing the transmission amount of light by the adjustment of orientations of liquid crystals or decreasing the luminance of the backlight. Further, the meter display 62 may be configured as a touch panel type organic EL display or LCD, and may function as an input apparatus and an output apparatus.

Further, when the visibility of the meter display 62 has been decreased, the visibility adjustment unit 35 may display a display item for interrupt displaying, on the meter display 62, depending on the state of the vehicle 1. For example, the display item for the interrupt displaying shows that the door of the vehicle 1 is open.

Further, as for the first to fourth triggers that cause the transition of the power supply state of the vehicle 1, another condition may be adopted. For example, the first trigger that causes the transition of the power supply state of the vehicle 1 from Power Supply OFF to On Board may be the pressing of the start switch 5. Further, some of the first to fifth end conditions may be excluded.

Further, the server 300 or the like provided in the exterior of the vehicle 1 may function as the display control device. In this case, necessary information is sent from the vehicle 1 to the server 300, and the ECU 30 of the vehicle 1 controls the displays in the vehicle 1, in response to instructions from the server 300.

Further, the second embodiment and the third embodiment can be carried out so as to be combined. In this case, in the third embodiment, the control routine of the visibility adjustment process in FIG. 11 is executed similarly to the second embodiment. At this time, in step S205, the visibility adjustment unit 35 turns off the light of the left-side operation display 63 and the right-side operation display 64, and turns off the displaying of display items other than tell-tales while displaying tell-tales on the meter display 62. Further, in step S207, the visibility adjustment unit 35 turns off the light of the MM display 61, the left-side operation display 63, and the right-side operation display 64, and turns off the displaying of display items other than tell-tales while displaying tell-tales on the meter display 62.

Further, a computer program that causes a computer to realize functions of units included in the processor 33 of the ECU 30 or the processor of the server may be provided as a form in which the computer program is stored in a computer-readable recording medium or a form in which the computer program is included in a computer program product, For example, the computer-readable recording medium is a magnetic recording medium, an optical recording medium, or a semiconductor memory.

## Claims

1. A display control device that controls at least one in-vehicle display (6), the display control device comprising a processor (30) configured to decrease visibility of the at least one display (6), in response to a user input from a user of a vehicle, wherein
the at least one display (6) includes a meter display (62).

2. The display control device according to claim 1, wherein the processor (30) is configured to decrease a luminance of the meter display (62).

3. The display control device according to claim 1, wherein the processor (30) is configured to:
generate a black image on the meter display (62); and
turn off light of the meter display (62).

4. The display control device according to claim 1, wherein:
the meter display (62) includes a plurality of layers; and
the processor (30) is configured to display black images on some layers among the plurality of the layers.

5. The display control device according to claim 4, wherein the some layers are configured not to display a tell-tale.

6. The display control device according to any one of claims 1 to 5, wherein:
the at least one display (6) includes a multimedia display (61);
the user input includes a first user input for an instruction to turn off light of a first display group and a second user input for an instruction to turn off light of a second display group, the first display group including the meter display (62) and not including the multimedia display (61), the second display group including the meter display (62) and the multimedia display (61); and
the processor (30) is configured to decrease visibility of the first display group in response to the first user input and decrease visibility of the second display group in response to the second user input.

7. The display control device according to claim 6, wherein the processor (30) is configured to increase the visibility of the first display group due to an operation of the multimedia display (61) by the user, in a situation where the visibility of the first display group has been decreased.

8. The display control device according to claim 6, wherein the processor (30) is configured to increase the visibility of the second display group due to an operation of the multimedia display (61) by the user, in a situation where the visibility of the second display group has been decreased.

9. The display control device according to any one of claims 1 to 5, wherein the processor (30) is configured to:
set a mode of the vehicle to a state keeping mode, the state keeping mode being a mode in which a vehicle state is kept based on an instruction from the user, the vehicle state being a vehicle state where electric power is supplied to an air conditioner of the vehicle and the at least one display (6) and is not supplied to a drive system of the vehicle; and
permit decrease in the visibility of the at least one display (6), in response to setting the mode of the vehicle to the state keeping mode.

10. A display control method that is executed by a computer for controlling at least one in-vehicle display (6), the display control method comprising decreasing visibility of the at least one display (6), in response to a user input from a user of a vehicle, wherein
the at least one display (6) includes a meter display (62).

11. A non-transitory storage medium storing instructions that are executable by one or more processors (30) and that cause the one or more processors (30) to perform functions for controlling at least one in-vehicle display (6), the functions comprising decreasing visibility of the at least one display (6), in response to a user input from a user of a vehicle, wherein
the at least one display (6) includes a meter display (62).
